# FASCICULE DE BREVET EUROPEEN

(11) **EP 2 819 921 B1**
(45) Date de publication et mention de la délivrance du brevet: **24.10.2018**
(21) Numéro de dépôt: 13708203.8
(22) Date de dépôt: 13.02.2013
(51) Int. Cl.: B64D 33/10, B64D 15/02, B64D 15/04, B64D 15/06, F02C 7/047, F02C 7/12

(54) **NACELLE DE TURBOMOTEUR ÉQUIPÉ D'UN ÉCHANGEUR DE CHALEUR**
TRIEBWERKSGONDEL MIT INTEGRIERTEM WÀRMETAUSCHER
ENGINE NACELLE COMPRISING A HEAT EXCHANGER

(30) Priorité: 02.03.2012 FR 1251942
(43) Date de publication de la demande: 07.01.2015
(73) Titulaire: Safran Nacelles, 76700 Gonfreville-l'Orcher (FR)
(72) Inventeur: CARUEL, Pierre, F-76600 Le Havre (FR); ZAGANELLI, Franck, F-77300 Fontainebleau (FR); GONIDEC, Patrick, F-31530 Bretx (FR); KERBLER, Olivier, F-92160 Antony (FR)
(74) Mandataire: Gaillarde, Frédéric F. Ch.
(86) Numéro de dépôt international: PCT/FR2013/050290
(87) Numéro de publication internationale: WO 2013/128093

(56) Documents cités:
- EP-A2- 1 479 889
- US-A- 4 782 658

## Description

La présente invention se rapporte à une nacelle de turbomoteur équipée d'un système de refroidissement d'huile moteur.

Un avion est propulsé par un ou plusieurs ensembles propulsifs comprenant chacun un turbomoteur logé dans une nacelle tubulaire. Chaque ensemble propulsif est rattaché à l'avion par un mât situé généralement sous ou sur une aile ou au niveau du fuselage.

Une nacelle présente généralement une structure comprenant une entrée d'air en amont du moteur, une section médiane destinée à entourer une soufflante ou les compresseurs du turbomoteur et son carter, une section aval pouvant abriter des moyens d'inversion de poussée et destinée à entourer la chambre de combustion du turbomoteur, et est généralement terminée par une tuyère d'éjection dont la sortie est située en aval du turbomoteur.

De manière générale, le turbomoteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu pour assurer une bonne lubrification de ces moyens de transmission et les refroidir.

Par voie de conséquence, le lubrifiant doit ensuite également être refroidi par l'intermédiaire d'un échangeur de chaleur.

Pour ce faire, une première méthode connue consiste à refroidir le lubrifiant par circulation à travers un échangeur air/huile utilisant de l'air prélevé dans une veine secondaire (flux dit froid) de la nacelle ou d'un des premiers étages de compresseur.

Le prélèvement et la circulation d'air au travers de cet échangeur, perturbe l'écoulement du flux d'air et entraîne des pertes de charges supplémentaires (traînée) ce qui n'est pas souhaitable.

Il a notamment été calculé que dans le cas d'un moteur à soufflante à réducteur, cela pouvait représenter des pertes équivalentes à environ 1 % de consommation de carburant.

Une autre solution est apparue dans le cadre des systèmes de dégivrage de la nacelle.

En effet, en vol, selon les conditions de température et d'humidité, de la glace peut se former sur la nacelle, notamment au niveau de la surface externe de la lèvre d'entrée d'air équipant la section d'entrée d'air.

La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur ou la voilure, et présenter un risque pour la sécurité du vol.

Une solution pour dégivrer la surface externe de la nacelle consiste à éviter que de la glace ne se forme sur cette surface externe en maintenant la surface concernée à une température suffisante.

Ainsi, la chaleur du lubrifiant peut être utilisée pour réchauffer les surfaces externes de la nacelle, le lubrifiant étant de ce fait refroidi et en mesure d'être réutilisé dans le circuit de lubrification.

Les documents US 4 782 658 et EP 1 479 889, notamment, décrivent la mise en oeuvre de tels systèmes de dégivrage utilisant la chaleur du lubrifiant moteur.

Plus précisément, le document US 4 782 658 décrit un système de dégivrage utilisant de l'air extérieur prélevé par une écope et réchauffé au travers un échangeur air/huile pour servir au dégivrage. Un tel système permet un meilleur contrôle des énergies thermiques échangées, mais la présence d'écopes dans la surface externe de la nacelle entraîne une perte des performances aérodynamiques.

Le document EP 1 479 889 décrit, quant à lui, un système de dégivrage d'une structure d'entrée d'air de nacelle de turboréacteur utilisant un échangeur air/huile en circuit fermé, l'air intérieur réchauffé de la structure d'entrée d'air étant mis en convection forcée par un ventilateur.

Il convient de noter que la structure d'entrée d'air est creuse et forme une chambre fermée de circulation d'air de dégivrage réchauffé par l'échangeur disposé à l'intérieur de cette chambre.

Ainsi, l'énergie thermique disponible pour le dégivrage dépend de la température du lubrifiant.

En outre, la surface d'échange de la structure d'entrée d'air est fixe et limitée et l'énergie réellement dissipée dépend essentiellement de la chaleur nécessaire au dégivrage et donc des conditions extérieures.

Il s'ensuit que le refroidissement du lubrifiant, ainsi que la température à laquelle est maintenue l'entrée d'air, sont difficilement contrôlables.

Comme on le constate, les systèmes proposés sont difficilement régulables en fonction de la quantité de chaleur à dissiper et des besoins de dégivrage réels et ne sont pas adaptables en fonction des besoins réels et notamment des phases de vol. De plus, la surface externe de la lèvre seule peut ne pas être suffisante à la dissipation de toute la chaleur conduite par le lubrifiant, en particulier si le turbomoteur est équipé d'un réducteur dissipant une grande quantité de chaleur.

Il existe donc un besoin pour un système permettant de contrôler et optimiser à la fois les performances de refroidissement du lubrifiant moteur et les performances de dégivrage.

Pour ce faire, la présente invention se rapporte à une nacelle de turbomoteur présentant une structure sensiblement tubulaire et comprenant au moins un carénage externe définissant une surface aérodynamique externe et au moins un carénage interne définissant une surface aérodynamique intérieure d'écoulement à travers le turbomoteur, lesdites surfaces externe et interne étant reliées en amont par une paroi de bord d'attaque formant lèvre d'entrée d'air, ladite nacelle de turbomoteur comprenant au moins un échangeur de chaleur entre un premier fluide à réchauffer et un deuxième fluide à refroidir, caractérisée en ce que l'échangeur est associé à au moins un conduit de circulation du premier fluide à réchauffer formant au moins une boucle de recirculation à travers l'échangeur et comprenant au moins une zone de circulation du premier fluide s'étendant au moins partiellement le long du carénage externe au contact d'au moins une paroi dudit carénage externe de manière à permettre un échange de chaleur par conduction avec l'air extérieur de la nacelle.

Par boucle de recirculation, il convient d'entendre un circuit recirculant la totalité du fluide. Cela implique un point d'entrée et un point de sortie à travers l'échangeur et le conduit de recirculation vise à relier le point de sortie au point d'entrée.

Ainsi, la chaleur récupérée par le premier fluide de l'huile de lubrification moteur, par exemple, ou d'un autre fluide chaud à refroidir, peut être dissipée au niveau du carénage externe par conduction.

Ce carénage externe possède naturellement une surface d'échange thermique disponible beaucoup plus importante que la seule surface de lèvre d'entrée d'air, par exemple, et rend ainsi la dissipation thermique plus efficace et mieux contrôlable.

Par ailleurs, cette surface n'étant pas un bord d'attaque, elle est moins directement exposée au givre et l'écoulement d'air externe assure ainsi une dissipation thermique plus constante.

La zone de circulation du premier fluide au niveau du carénage externe s'effectue par l'intermédiaire d'au moins une double paroi dudit carénage externe possédant un espace intérieur apte à permettre la circulation du premier fluide.

Préférentiellement, le conduit de circulation du premier fluide est équipé de moyens de circulation forcée dudit premier fluide.

Avantageusement, la nacelle comprend au moins un conduit de circulation du premier fluide à travers au moins une chambre de la lèvre d'entrée en vue de permettre son dégivrage.

Ainsi, en prévoyant plusieurs zones de dissipation de chaleur, il est possible d'optimiser la quantité de chaleur distribuée à chaque zone en fonction des besoins réels de dégivrage et de la température du fluide et bien sûr de la température extérieure.

Dans le cas où la lèvre n'a pas besoin d'être dégivrée, on pourra diriger la chaleur à dissiper vers la zone de circulation au niveau du carénage externe, réduisant ainsi le risque de surchauffer les matériaux de la lèvre d'entrée d'air. Réciproquement, dans le cas où les besoins en chaleur de dégivrage sont plus importants, on pourra diriger le fluide préférentiellement vers la structure de lèvre.

Avantageusement, encore, le conduit de circulation du premier fluide à travers la lèvre d'entrée d'air comprend au moins une portion de recirculation à travers l'échangeur.

Afin de suivre encore plus précisément les besoins en dégivrage, la nacelle comprend au moins un moyen de chauffage complémentaire du premier fluide, notamment un moyen de chauffage électrique.

Ainsi, dans le cas où la température du fluide à refroidir, notamment le lubrifiant moteur, est insuffisante ou ne permet pas de récupérer suffisamment de chaleur pour les besoins de dégivrage, le premier fluide pourra être réchauffé à la température souhaitée par le moyen de chauffage complémentaire.

Selon un premier mode de réalisation, le moyen de chauffage additionnel est situé sensiblement au niveau de l'échangeur.

Selon un deuxième mode de réalisation, éventuellement complémentaire, le moyen de chauffage additionnel est déporté de l'échangeur et disposé au niveau d'un conduit de circulation particulier du premier fluide.

Avantageusement, le conduit de circulation du premier fluide est équipé d'au moins une vanne de régulation.

Préférentiellement, le premier fluide est de l'air, l'échangeur de chaleur étant un échangeur de type air/huile, et l'huile est un lubrifiant moteur du turbomoteur.

Alternativement, le premier fluide est un liquide. Avantageusement encore, le premier fluide subit au moins un changement phase au cours de sa circulation.

De manière avantageuse, le conduit de circulation du premier fluide comprend au moins un moyen de prélèvement du premier fluide, se présentant notamment sous la forme d'une écope de prélèvement placée avantageusement en aval de la soufflante ou en aval d'un des premiers étages de compresseur, l'écope étant de préférence équipée d'au moins une vanne de régulation.

De manière avantageusement complémentaire, le conduit de circulation du premier fluide comprend au moins un moyen d'évacuation du premier fluide, se présentant notamment sous la forme d'une écope de sortie, l'écope étant de préférence équipée d'au moins une vanne de régulation.

Les écopes de prélèvement et de sortie pourront déboucher soit au niveau du carénage externe (préférentiellement) soit au niveau du carénage interne.

Selon un mode de réalisation avantageux, le carénage externe de la nacelle comprend un carénage externe d'un pylône de turbomoteur, et la zone de circulation de la boucle de recirculation du premier fluide s'étendant au moins partiellement le long du carénage externe du pylône, préférentiellement sur une surface destinée à être exposée à l'écoulement d'air externe autour de la nacelle.

La présente invention se rapport également à un ensemble propulsif d'aéronef comprenant un turbomoteur logé à l'intérieur d'une nacelle, caractérisé en ce que la nacelle est une nacelle selon l'invention.

La présente invention sera mieux comprise à la lumière de la description détaillée qui suit en regard du dessin annexé dans lequel :
- la figure 1 est une représentation schématique partielle d'une partie amont d'une nacelle de turboréacteur (turbomoteur à soufflante) selon l'invention comprenant un circuit de refroidissement de l'huile lubrifiant moteur,
- les figures 2 à 5 représentent différents modes de circulation du premier fluide à travers le circuit de refroidissement de la nacelle de la figure 1,
- les figures 6 et 7 sont des représentations schématiques d'une double paroi du carénage externe permettant la circulation du premier fluide,
- la figure 8 est une représentation schématique d'une partie amont d'une nacelle de turboréacteur selon une variante de réalisation de l'invention,
- la figure 9 est une représentation schématique d'une partie amont d'une nacelle de turboréacteur selon une autre variante de réalisation de l'invention, dans laquelle le premier fluide est un liquide subissant un changement de phase au cours de sa circulation,
- les figures 10 à 12 illustrent la mise en oeuvre de l'invention pour une nacelle de turbomoteur à hélices.

Une nacelle 1 de turbomoteur constitue un logement pour le turbomoteur 2 et présente une structure sensiblement tubulaire comprenant un carénage externe 3 définissant une surface aérodynamique externe et un carénage interne 4 définissant une surface aérodynamique intérieure d'écoulement à travers le turbomoteur et notamment une soufflante 5.

Les carénages externe 3 et interne 4 sont reliés en amont par une paroi de lèvre d'entrée d'air 6 constituant un bord d'attaque de la nacelle.

Les carénages externe 3 et interne 4 de la nacelle définissent un espace intérieur abritant un système de refroidissement du lubrifiant moteur du turbomoteur 2.

Le système de refroidissement comprend un échangeur de chaleur 10 de type air/huile alimenté, d'une part, par le lubrifiant (deuxième fluide) à refroidir, et d'autre part, par de l'air (premier fluide) à réchauffer.

Le lubrifiant est amené à l'échangeur par un système de pompage du turbomoteur (non visible) et un conduit de circulation 111 traversant un bras support 2a du turbomoteur et traversant la veine de circulation d'air.

L'air de refroidissement circule à travers l'échangeur 10 où il récupère une partie de l'énergie thermique du lubrifiant (ce qui le refroidit) et à travers un ensemble 13 de conduits de circulation permettant de l'amener au niveau de zones froides où il pourra évacuer son énergie thermique avant un nouveau cycle à travers l'échangeur.

L'air de refroidissement peut circuler en circuit fermé ou peut être renouvelé par prélèvement et évacuation d'air.

L'ensemble 13 de conduits de circulation va être décrit en détail.

L'ensemble 13 de conduit de circulation présente une première extrémité 11 reliée à une sortie d'air de l'échangeur 10 et une deuxième extrémité 12 reliée à une entrée d'air de l'échangeur 10.

Ainsi, la première extrémité 11 reçoit de l'échangeur 10 l'air réchauffé par le lubrifiant en vue de le diffuser à travers les conduits de circulation, et la deuxième extrémité 12 reçoit de l'air froid alimentant l'échangeur 10 en vue de son réchauffement par le lubrifiant.

Entre la première extrémité 11 et sa deuxième extrémité 12, l'ensemble de conduits de circulation comprend plusieurs zones de circulation de l'air réchauffé.

Conformément à l'invention, l'ensemble 13 de conduits de circulation comprend une boucle de circulation de l'air formant une boucle de recirculation à travers l'échangeur, c'est-à-dire s'étendant entre la première extrémité 11 et la deuxième extrémité 12 de manière à permettre la recirculation continue de l'air à travers l'échangeur, ladite boucle de recirculation comprenant une zone de circulation 13a de l'air s'étendant le long du carénage externe 3 au contact d'une paroi dudit carénage de manière à permettre un échange de chaleur par convection avec l'air extérieur de la nacelle.

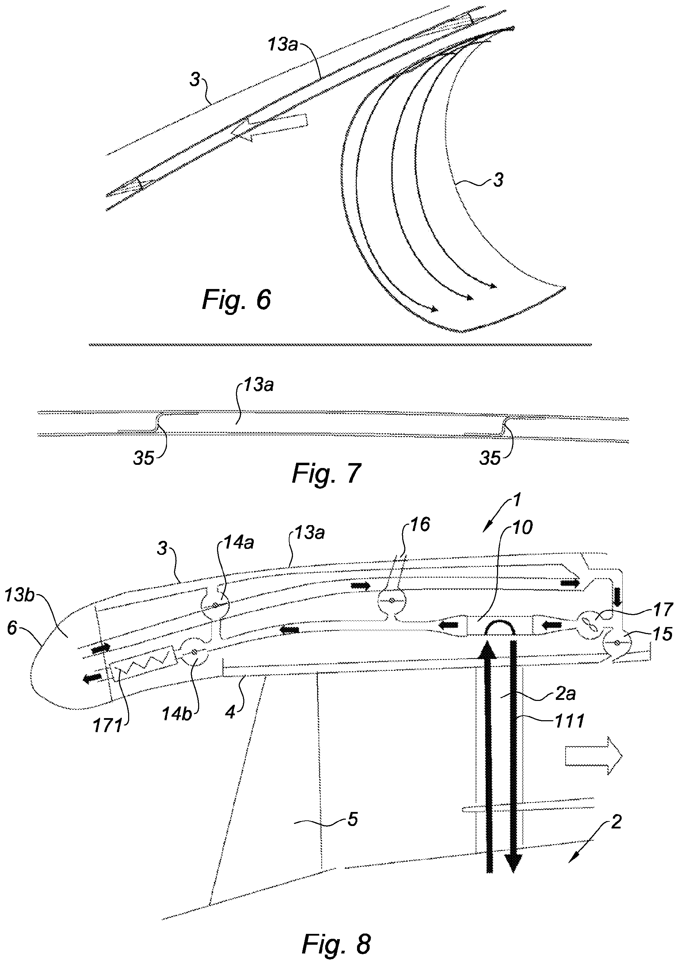

La zone de circulation 13a sera plus particulièrement réalisée dans un espace intérieur d'une double paroi dudit carénage externe 3 (voir figures 6 et 7).

L'ensemble 13 de conduits de circulation comprend en outre une autre boucle de circulation, à savoir une boucle de circulation à travers une chambre de dégivrage 13b de la lèvre d'entrée d'air 6.

Les boucles de circulation 13a et 13b sont par ailleurs chacune équipées d'une vanne de régulation 14a, 14b correspondante.

L'ensemble 13 de conduits de circulation est équipé au niveau de son extrémité 12 alimentant l'échangeur 10 d'une écope de prélèvement 15 d'air froid débouchant au niveau du carénage interne 4 dans la veine de circulation d'air du turboréacteur et en aval de la soufflante 5 ou en aval d'un des premiers étages de compresseur du turbomoteur.

L'ensemble 13 de conduits de circulation est équipé au niveau de son extrémité 11 de sortie d'air de l'échangeur d'un conduit de sortie comprenant une écope d'évacuation 16 débouchant au niveau du carénage externe 3.

L'ensemble 13 est enfin complété au niveau de son extrémité 12 alimentant l'échangeur 10 d'un ventilateur 17 permettant la mise en convection forcée de l'air de refroidissement à travers l'échangeur 10 et l'ensemble 13 de conduits de circulation.

On notera que l'échangeur 10 est complété par une résistance 171 de chauffage additionnel permettant d'apporter un complément d'énergie thermique à l'air en cas de besoin si la température du fluide lubrifiant est notamment trop basse pour les besoins de dégivrage.

Comme on le verra dans un mode de réalisation ultérieur, cette résistance 171 peut bien évidemment être déportée de l'échangeur 10 et placée à un autre endroit sur le conduit de circulation, notamment sur la boucle de dégivrage 13b de l'entrée d'air 6.

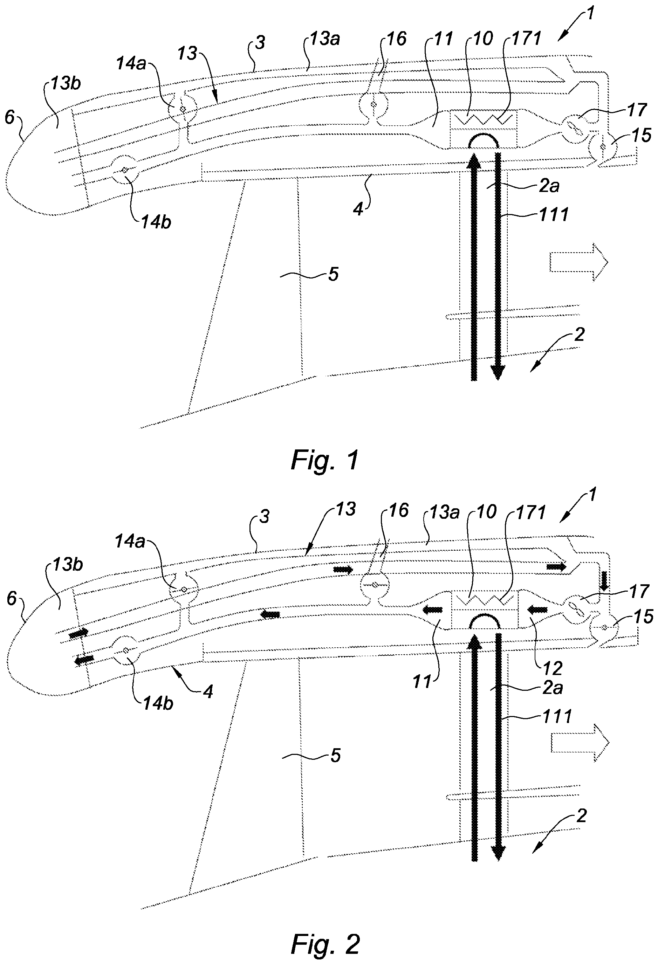

La figure 2 montre la circulation de l'air de refroidissement lorsque l'ensemble 13 de circulation est en mode de dégivrage de la lèvre d'entrée d'air 6.

Dans un tel mode, et plus généralement en vol croisière, l'ensemble 13 de circulation fonctionne en circuit fermé et les écopes de prélèvement 15 et de sortie 16 sont closes.

La vanne 14b de régulation du circuit de dégivrage est ouverte, tandis que la vanne 14a de la zone de recirculation 13a le long du carénage externe 3 est close.

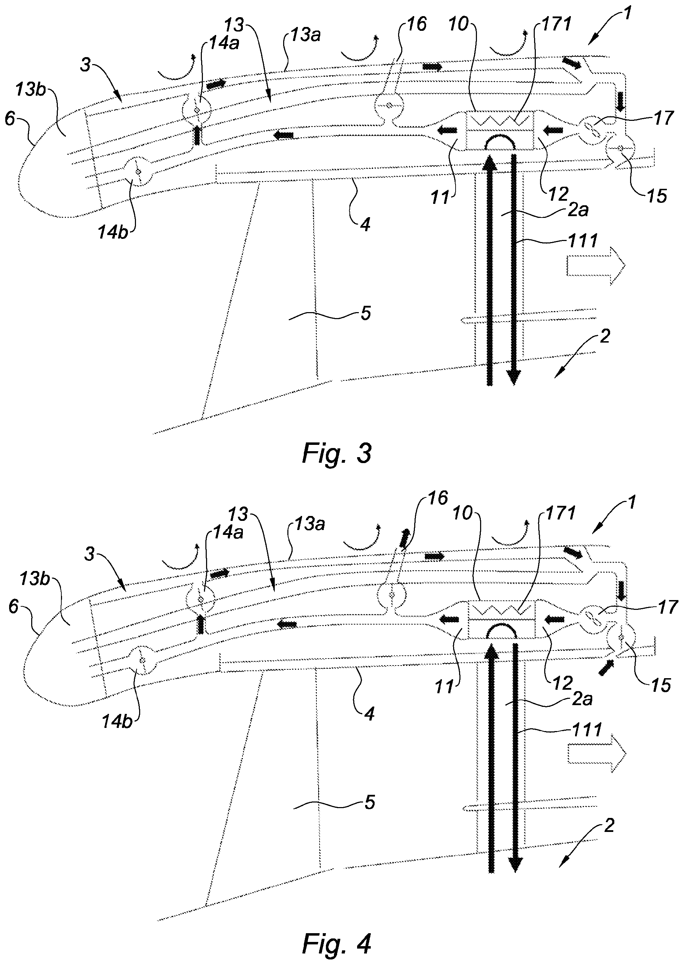

La figure 3 montre la circulation de l'air de refroidissement lorsque l'ensemble 13 de circulation est en mode hors-dégivrage de la lèvre d'entrée d'air 6.

Dans un tel mode, l'ensemble 13 de circulation fonctionne en circuit fermé et les écopes de prélèvement 15 et de sortie 16 sont closes.

La vanne 14b de régulation du circuit de dégivrage est close, tandis que la vanne 14a de la zone de recirculation 13a le long du carénage externe 3 est ouverte.

La figure 4 montre la circulation de l'air de refroidissement au décollage (température extérieure élevée).

Dans un tel mode, l'ensemble 13 de circulation fonctionne en circuit ouvert et les écopes de prélèvement 15 et de sortie 16 sont ouvertes. Le ventilateur 17 est actif.

La vanne 14b de régulation du circuit de dégivrage est close tandis que la vanne 14a de la zone de recirculation 13a le long du carénage externe 3 est ouverte.

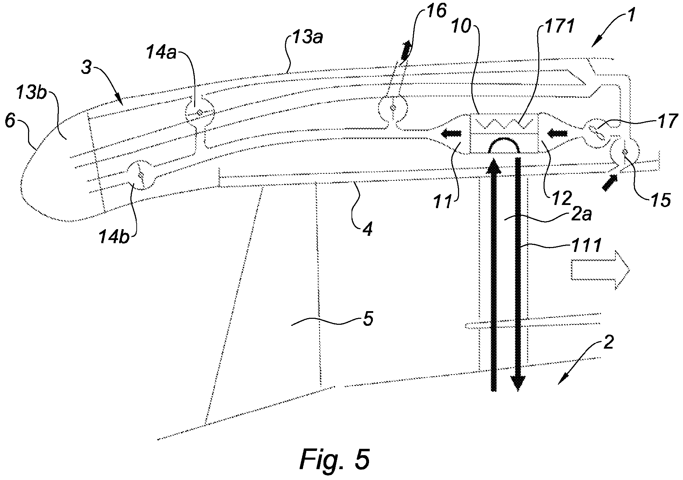

La figure 5 montre la circulation de l'air de refroidissement lors d'un fonctionnement au ralenti au sol (température extérieure élevée, vitesse de l'air autour de la nacelle faible ou nulle et puissance turbomoteur faible).

Dans un tel mode, l'ensemble 13 de circulation fonctionne en circuit ouvert et les écopes de prélèvement 15 et de sortie 16 sont ouvertes. Le ventilateur 17 est actif pour augmenter le débit d'air de refroidissement circulant à travers l'échangeur 10.

La vanne 14b de régulation du circuit de dégivrage est close ainsi que la vanne 14a de la zone de recirculation 13a le long du carénage externe 3.

Le fonctionnement en circuit fermé permet de limiter les perturbations aérodynamiques dues au prélèvement et à l'évacuation d'air. En croisière notamment, où la vitesse extérieure de l'air est suffisante et la température extérieure suffisamment faible pour assurer les échanges nécessaires, il n'est pas nécessaire de prélever de l'air supplémentaire. Cela permet d'éviter une surconsommation du turbomoteur due aux pertes sur les compresseurs ou la soufflante.

Réciproquement, au décollage, où la puissance du turbomoteur est maximale et où les perturbations aérodynamiques ont moins d'impact, on pourra effectuer un prélèvement d'air maximal.

Au ralenti au sol, le ventilateur 17 sera activé afin d'augmenter le débit d'air traversant l'échangeur et par la même la capacité de refroidissement du lubrifiant. En cas de prélèvement d'air, le ventilateur 17 augmentera également le débit d'air prélevé.

On notera qu'en cas de blocage de la vanne de dégivrage 14b, la température d'air de dégivrage délivré par l'échangeur 10 ne dépassera pas la température maximale du lubrifiant, à savoir environ 180°C. Ceci permet de limiter les sur-températures vues par la lèvre 6 et d'augmenter sa durée de vie.

Bien évidement, les différents modes de fonctionnement sont donnés à titre d'exemple et les vannes, 14a, 14b, écopes 15, 16, conduits de circulation 13a, 13b, ventilateur 17 et résistance 171 peuvent être activés ou non de manière indépendante et combinés en fonction des besoins de dégivrage, dissipation thermique, refroidissement du lubrifiant, etc ...

La figure 6 montre une paroi du carénage externe 3 se présentant sous la forme d'une double paroi définissant un espace intérieur (flèche) à l'intérieur duquel un flux d'air à refroidir peut circuler. L'espace intérieur de cette double paroi constitue ainsi une zone de circulation s'étendant au moins partiellement le long du carénage externe et permet un échange de chaleur par conduction avec l'air extérieur de la nacelle.

La figure 7 est une vue en coupe de la paroi de la figure 6. Afin d'assurer la tenue de la double paroi et le maintien de l'espace de circulation, on prévoira des raidisseurs internes 35.

La figure 8 montre une variante de réalisation dans laquelle la résistance 171 de chauffage additionnel est déportée sur la boucle de circulation 13b de dégivrage de lèvre d'entrée d'air 6. Elle est située après la vanne 14b et avant la chambre de dégivrage de la lèvre 6.

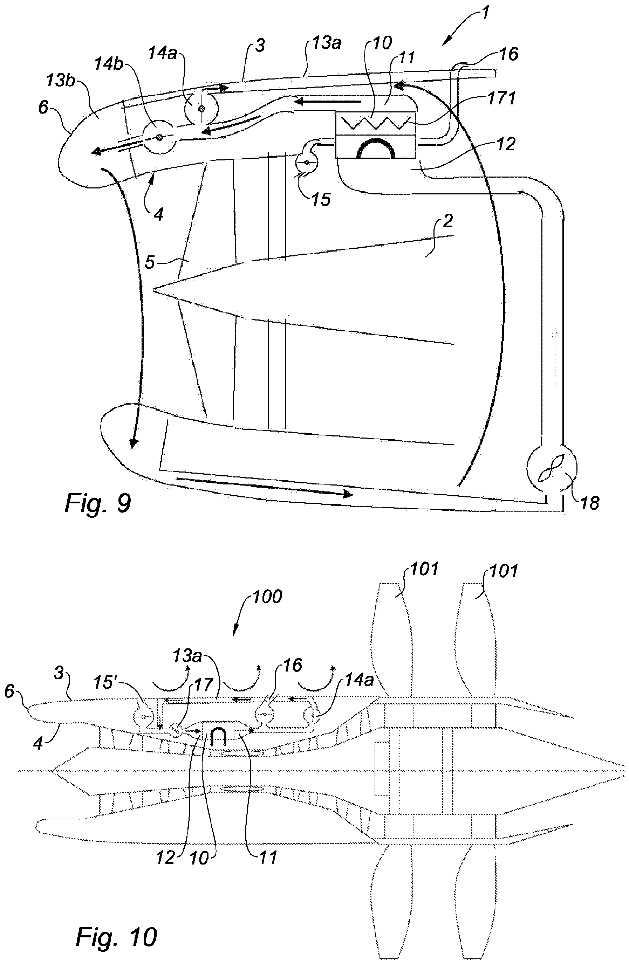

La figure 9 montre une variante de réalisation dans laquelle un liquide est utilisé à la place de l'air comme fluide de refroidissement. Par ailleurs, le liquide subit un changement de phase au cours de son cycle.

Plus précisément, le lubrifiant moteur est refroidit dans l'échangeur 10 et cède de sa chaleur au liquide de refroidissement.

Le liquide de refroidissement est choisi de manière à ce que cette chaleur récupérée provoque son évaporation avant circulation à travers l'ensemble 13 de conduits de circulation.

Au cours de sa circulation, le liquide de refroidissement évaporé est refroidi, soit au niveau du carénage externe 3 conformément à l'invention, soit par exemple, au niveau de la lèvre d'entrée d'air 6 en passant dans sa chambre de dégivrage.

Ce faisant, le liquide de refroidissement évaporé se recondense et la gravité l'entraîne vers le bas de la nacelle où il est ensuite pompé par une pompe 18 pour être renvoyé vers l'échangeur.

Il en va de même pour le fluide circulant dans la double paroi 13a.

La circulation du liquide de refroidissement s'effectue donc en circuit fermé.

Le fait pour le liquide de subir des changements de phase au cours de son cycle lui permet d'échanger des quantités de chaleur beaucoup plus importantes et d'avoir un fort pouvoir dégivrant pour la lèvre 6 et un pouvoir refroidissant pour le lubrifiant beaucoup plus important.

De manière complémentaire l'échangeur 10 peut rester équipé d'un moyen de chauffage additionnel 17.

De manière complémentaire également, l'échangeur 10 peut être un échangeur triple permettant la circulation d'air de refroidissement d'appoint.

Les figures 10 à 12 illustrent la mise en oeuvre de l'invention pour une nacelle 100 de turbomoteur à hélices 101 arrière.

Le dispositif de refroidissement équipant la nacelle de la figure 10 est similaire aux dispositifs décrits précédemment à la différence qu'il ne comprend pas de conduit de circulation de dégivrage (mais cela est possible) et qu'il comprend une vanne de prélèvement d'air 15' débouchant dans le carénage externe 3.

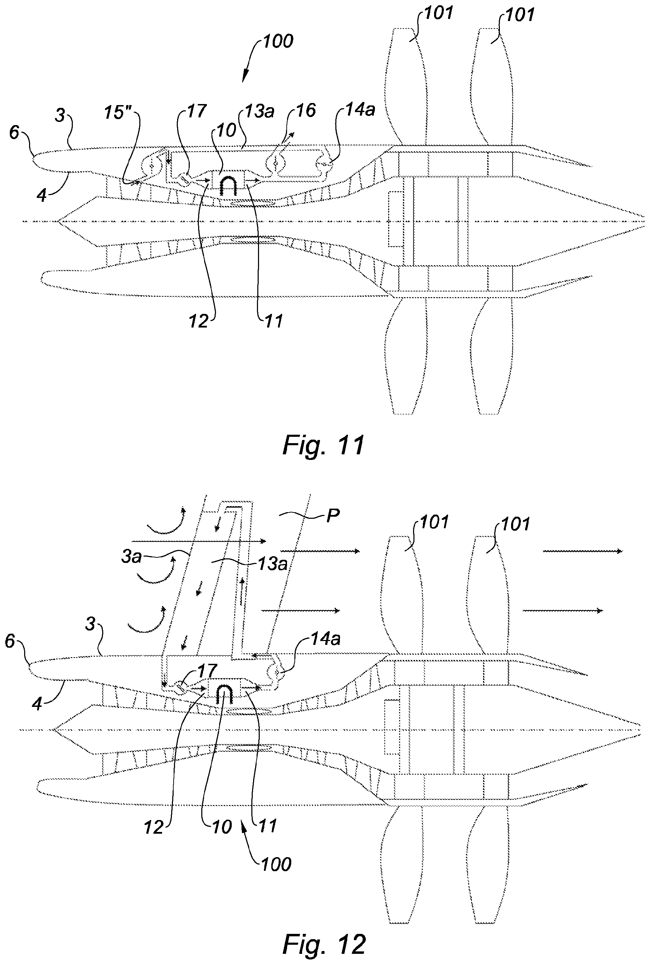

Dans la variante représentée à la figure 11, le prélèvement d'air 15" s'effectue au niveau des premiers étages du compresseur du turbomoteur.

En croisière, le fonctionnement s'effectuera principalement en circuit fermé. Pour les autres modes de fonctionnement, de l'air pourra être prélevé à l'extérieur ou dans les premiers étages du compresseur.

La figure 12 présente une alternative de réalisation dans laquelle le carénage externe 3 de la nacelle comprend un carénage externe 3a d'un pylône P du turbomoteur, et la zone de circulation 13a de la boucle de recirculation du premier fluide s'étendant au moins partiellement le long du carénage externe 3a du pylône P, préférentiellement sur une surface destinée à être exposée à l'écoulement d'air externe autour de la nacelle.

Cela permet notamment d'utiliser l'aspiration des hélices 101 pour obtenir un refroidissement important de l'air de refroidissement du lubrifiant y compris au ralenti au sol.

Il peut ainsi ne pas être nécessaire de prévoir un prélèvement et une évacuation d'air. Le dispositif de refroidissement du lubrifiant peut ainsi fonctionner en circuit fermé et n'envoie pas d'air chaud vers les pales des hélices.

Bien que l'invention ait été décrite avec un exemple particulier de réalisation, il est bien évident qu'elle n'y est nullement limitée et qu'elle comprend tous les équivalents techniques des moyens décrits, ainsi que leurs combinaisons si celles-ci entrent dans le cadre de l'invention défini par le texte des revendications.

## Revendications

1. Nacelle (1) de turbomoteur présentant une structure sensiblement tubulaire et comprenant au moins un carénage externe (3) définissant une surface aérodynamique externe et au moins un carénage interne (4) définissant une surface aérodynamique intérieure d'écoulement à travers le turbomoteur, lesdites surfaces externe et interne étant reliées en amont par une paroi de bord d'attaque formant lèvre d'entrée d'air (6), ladite nacelle de turbomoteur comprenant au moins un échangeur de chaleur (10) entre un premier fluide à réchauffer et un deuxième fluide à refroidir, l'échangeur étant associé à au moins un conduit de circulation (13) du premier fluide à réchauffer formant au moins une boucle de recirculation à travers l'échangeur **caractérisée en ce que** ledit conduit de circulation (13) comprend au moins une zone de circulation (13a) du premier fluide s'étendant au moins partiellement le long du carénage externe au contact d'au moins une paroi dudit carénage externe distincte de la paroi de bord d'attaque formant lèvre d'entrée d'air (6), de manière à permettre un échange de chaleur par conduction avec l'air extérieur de la nacelle, la zone de circulation (13a) du premier fluide au niveau du carénage externe s'effectuant par l'intermédiaire d'au moins une double paroi dudit carénage externe (3) possédant un espace intérieur apte à permettre la circulation du premier fluide.

2. Nacelle (1) de turbomoteur selon la revendication 1, **caractérisée en ce que** le conduit de circulation (13) du premier fluide est équipé de moyens de circulation forcée (17, 18) dudit premier fluide.

3. Nacelle (1) de turbomoteur selon la revendication 1 ou 2, **caractérisée en ce qu'**elle comprend au moins un conduit de circulation (13b) du premier fluide à travers au moins une chambre de la lèvre d'entrée (6) en vue de permettre son dégivrage.

4. Nacelle (1) de turbomoteur selon l'une quelconque des revendications 1 à 3, **caractérisée en ce que** le conduit de circulation (13b) du premier fluide à travers la lèvre d'entrée d'air comprend au moins une portion de recirculation à travers l'échangeur.

5. Nacelle (1) de turbomoteur selon l'une quelconque des revendications 1 à 4, **caractérisée en ce qu'**elle comprend au moins un moyen de chauffage (171) complémentaire du premier fluide, notamment un moyen de chauffage électrique.

6. Nacelle (1) de turbomoteur selon la revendication 5, **caractérisée en ce que** le moyen de chauffage (171) additionnel est situé sensiblement au niveau de l'échangeur (10).

7. Nacelle (1) de turbomoteur selon la revendication 5, **caractérisée en ce que** le moyen de chauffage (171) additionnel est déporté de l'échangeur (10) et disposé au niveau d'un conduit de circulation (13) particulier du premier fluide.

8. Nacelle (1) de turbomoteur selon l'une quelconque des revendications 1 à 7, **caractérisée en ce que** le conduit de circulation (13) du premier fluide est équipé d'au moins une vanne de régulation (14a, 14b).

9. Nacelle (1) de turbomoteur selon l'une quelconque des revendications 1 à 8, **caractérisée en ce que** le premier fluide est de l'air, l'échangeur (10) de chaleur étant un échangeur de type air / huile.

10. Nacelle (1) de turbomoteur selon la revendication 9, **caractérisée en ce que** ledit deuxième fluide est un lubrifiant moteur dudit turbomoteur (2).

11. Nacelle (1) de turbomoteur selon l'une quelconque des revendications 1 à 8, **caractérisée en ce que** le premier fluide est un liquide.

12. Nacelle (1) de turbomoteur selon la revendication 11, **caractérisée en ce que** le premier fluide subit au moins un changement phase au cours de sa circulation.

13. Nacelle (1) de turbomoteur selon la revendication 9, **caractérisée en ce que** le conduit de circulation (13) du premier fluide comprend au moins un moyen de prélèvement (15) du premier fluide, se présentant notamment sous la forme d'une écope de prélèvement, l'écope étant de préférence équipée d'au moins une vanne de régulation.

14. Nacelle (1) de turbomoteur selon la revendication 13, **caractérisée en ce que** ladite écope (15) est située à une position sélectionnée dans le groupe comprenant une position en aval de la soufflante du turbomoteur (2), et une position à l'un des premiers étages de compression du turbomoteur.

15. Nacelle (1) de turbomoteur selon l'une des revendications 13 ou 14, **caractérisée en ce que** le conduit de circulation (13) du premier fluide comprend au moins un moyen d'évacuation du premier fluide, se présentant notamment sous la forme d'une écope de sortie (16), l'écope étant de préférence équipée d'au moins une vanne de régulation.

16. Nacelle (1) de turbomoteur selon l'une quelconque des revendications 1 à 15, **caractérisée en ce que** la zone de circulation (13) de la boucle de recirculation du premier fluide s'étend au moins partiellement le long du carénage externe du pylône (P) reliant le turbomoteur à l'aéronef, préférentiellement sur une surface (3a) destinée à être exposée à l'écoulement d'air externe autour de la nacelle.

## Patentansprüche

1. Turbinenmotorgondel (1), aufweisend eine etwa rohrförmige Struktur und umfassend mindestens eine äußere Verkleidung (3), die eine äußere aerodynamische Oberfläche definiert, und mindestens eine innere Verkleidung (4), die eine innere aerodynamische Strömungsverkleidung durch den Turbinenmotor definiert, wobei die äußere und innere Verkleidung oberstromig durch eine Wand einer Anströmkante verbunden sind, die eine Lufteingangslippe (6) bildet, wobei die Turbinenmotorgondel mindestens einen Wärmetauscher (10) zwischen einem ersten, zu erwärmenden Fluid und einem zweiten, zu kühlenden Fluid umfasst, wobei der Tauscher mindestens einer Zirkulationsleitung (13) des ersten, zu erwärmenden Fluids zugeordnet ist, die mindestens eine Rezirkulationsschleife durch den Tauscher bildet, **dadurch gekennzeichnet, dass** die Zirkulationsleitung (13) mindestens eine Zirkulationszone (13a) des ersten Fluids umfasst, die sich mindestens teilweise entlang der äußeren Verkleidung im Kontakt mit mindestens einer Wand der äußeren Verkleidung erstreckt, die sich von der Wand einer Anströmkante unterscheidet, welche eine Lufteingangslippe (6) bildet, so dass ein Wärmeaustausch durch Konduktion mit der Außenluft der Gondel erlaubt wird, wobei die Zirkulationszone (13a) des ersten Fluids im Bereich der äußeren Verkleidung mit Hilfe mindestens einer doppelten Wand der äußeren Verkleidung (3) erfolgt, die einen Innenraum besitzt, der imstande ist, die Zirkulation des ersten Fluids zu erlauben.

2. Turbinenmotorgondel (1) nach Anspruch 1, **dadurch gekennzeichnet, dass** die Zirkulationsleitung (13) des ersten Fluids mit Zwangszirkulationsmitteln (17, 18) des ersten Fluids ausgestattet ist.

3. Turbinenmotorgondel (1) nach Anspruch 1 oder 2, **dadurch gekennzeichnet, dass** sie mindestens eine Zirkulationsleitung (13b) des ersten Fluids durch mindestens eine Kammer der Eingangslippe (6) zwecks ihrer Enteisung umfasst.

4. Turbinenmotorgondel (1) nach einem der Ansprüche 1 bis 3, **dadurch gekennzeichnet, dass** die Zirkulationsleitung (13b) des ersten Fluids durch die Lufteingangslippe mindestens einen Rezirkulationsabschnitt durch den Tauscher umfasst.

5. Turbinenmotorgondel (1) nach einem der Ansprüche 1 bis 4, **dadurch gekennzeichnet, dass** sie mindestens ein komplementäres Heizmittel (171) des ersten Fluids, vor allem ein elektrisches Heizmittel, umfasst.

6. Turbinenmotorgondel (1) nach Anspruch 5, **dadurch gekennzeichnet, dass** sich das zusätzliche Heizmittel (171) etwa im Bereich des Tauschers (10) befindet.

7. Turbinenmotorgondel (1) nach Anspruch 5, **dadurch gekennzeichnet, dass** das zusätzliche Heizmittel (171) von dem Tauscher (10) versetzt und im Bereich einer besonderen Zirkulationsleitung (13) des ersten Fluids angeordnet ist.

8. Turbinenmotorgondel (1) nach einem der Ansprüche 1 bis 7, **dadurch gekennzeichnet, dass** die Zirkulationsleitung (13) des ersten Fluids mit mindestens einem Regulierventil (14a, 14b) ausgestattet ist.

9. Turbinenmotorgondel (1) nach einem der Ansprüche 1 bis 8, **dadurch gekennzeichnet, dass** das erste Fluid Luft ist, wobei der Wärmetauscher (10) ein Tauscher vom Typ Luft/Öl ist.

10. Turbinenmotorgondel (1) nach Anspruch 9, **dadurch gekennzeichnet, dass** das zweite Fluid ein Motorschmiermittel des Turbinenmotors (2) ist.

11. Turbinenmotorgondel (1) nach einem der Ansprüche 1 bis 8, **dadurch gekennzeichnet, dass** das erste Fluid eine Flüssigkeit ist.

12. Turbinenmotorgondel (1) nach Anspruch 11, **dadurch gekennzeichnet, dass** das erste Fluid während seiner Zirkulation mindestens einem Phasenwechsel unterzogen wird.

13. Turbinenmotorgondel (1) nach Anspruch 9, **dadurch gekennzeichnet, dass** die Zirkulationsleitung (13) des ersten Fluids mindestens ein Entnahmemittel (15) des ersten Fluids vor allem in Form eines Entnahmeschöpfers umfasst, wobei der Schöpfer vorzugsweise mit mindestens einem Regulierventil ausgestattet ist.

14. Turbinenmotorgondel (1) nach Anspruch 13, **dadurch gekennzeichnet, dass** sich der Schöpfer (15) an einer ausgewählten Position in der Gruppe befindet, umfassend eine Position nach dem Lüfter des Turbinenmotors (2), und eine Position auf einer der ersten Kompressionsstufen des Turbinenmotors.

15. Turbinenmotorgondel (1) nach einem der Ansprüche 13 oder 14, **dadurch gekennzeichnet, dass** die Zirkulationsleitung (13) des ersten Fluids mindestens ein Auslassmittel des ersten Fluids vor allem in Form eines Auslassschöpfers (16) umfasst, wobei der Schöpfer vorzugsweise mit mindestens einem Regulierventil ausgestattet ist.

16. Turbinenmotorgondel (1) nach einem der Ansprüche 1 bis 15, **dadurch gekennzeichnet, dass** sich die Zirkulationszone (13) der Rezirkulationsschleife des ersten Fluids mindestens teilweise entlang der äußeren Verkleidung des Masts (P) erstreckt, welcher den Turbinenmotor mit dem Luftfahrzeug verbindet, vorzugsweise über eine Oberfläche (3a), die bestimmt ist, der Strömung der Außenluft um die Gondel ausgesetzt zu sein.

## Claims

1. A turboshaft engine nacelle (1) having a substantially tubular structure and comprising at least one outer fairing (3) defining an outer aerodynamic surface and at least one inner fairing (4) defining an internal aerodynamic flow surface through the turboshaft engine, said outer and inner surfaces being connected upstream by a leading edge wall forming an air inlet lip (6), said turboshaft engine nacelle comprising at least one heat exchanger (10) between a first fluid to warm up and a second fluid to cool down, the exchanger being associated to at least one circulation conduit (13) of the first fluid to warm up forming at least one recirculation loop through the exchanger, **characterized in that** said circulation conduit (13) comprises at least one circulation area (13a) of the first fluid extending at least partially along the outer fairing in contact with at least one wall of said outer fairing distinct from the leading edge wall forming an air inlet lip (6), so as to enable heat exchange by conduction with the outside air of the nacelle, the circulation area (13a) of the first fluid at the level of the outer fairing being achieved via at least one double-wall of said outer fairing (3) having an internal space capable of enabling the circulation of the first fluid.

2. The turboshaft engine nacelle (1) according to claim 1, **characterized in that** the circulation conduit (13) of the first fluid is equipped with means (17, 18) for forced circulation of said first fluid.

3. The turboshaft engine nacelle (1) according to claim 1 or 2, **characterized in that** it comprises at least one circulation conduit (13b) of the first fluid through at least one chamber of the inlet lip (6) in order to enable deicing thereof.

4. The turboshaft engine nacelle (1) according to any one of claims 1 to 3, **characterized in that** the circulation conduit (13b) of the first fluid through the air inlet lip comprises at least one recirculation portion through the exchanger.

5. The turboshaft engine nacelle (1) according to any one of claims 1 to 4, **characterized in that** it comprises at least one complementary means (171) for heating the first fluid, in particular an electric heating means.

6. The turboshaft engine nacelle (1) according to claim 5, **characterized in that** the additional heating means (171) is located substantially at the level of the exchanger (10).

7. The turboshaft engine nacelle (1) according to claim 5, **characterized in that** the additional heating means (171) is separate from the exchanger (10) and disposed at the level of a particular circulation conduit (13) of the first fluid.

8. The turboshaft engine nacelle (1) according to any one of claims 1 to 7, **characterized in that** the circulation conduit (13) of the first fluid is equipped with at least one control valve (14a, 14b).

9. The turboshaft engine nacelle (1) according to any one of claims 1 to 8, **characterized in that** the first fluid is air, the heat exchanger (10) being an air/oil type exchanger.

10. The turboshaft engine nacelle (1) according to claim 9, **characterized in that** said second fluid is an engine lubricant of said turboshaft engine (2).

11. The turboshaft engine nacelle (1) according to any one of claims 1 to 8, **characterized in that** the first fluid is a liquid.

12. The turboshaft engine nacelle (1) according to claim 11, **characterized in that** the first fluid undergoes at least one phase change during its circulation.

13. The turboshaft engine nacelle (1) according to claim 9, **characterized in that** the circulation conduit (13) of the first fluid comprises at least one means (15) for taking in the first fluid, in particular in the form of an intake scoop, the scoop being preferably equipped with at least one control valve.

14. The turboshaft engine nacelle (1) according to claim 13, **characterized in that** said scoop (15) is located at a position selected from the group comprising a position downstream of the fan of the turboshaft engine (2), and a position at any of the first compression stages of the turboshaft engine.

15. The turboshaft engine nacelle (1) according to any of claims 13 or 14, **characterized in that** the circulation conduit (13) of the first fluid comprises at least one means for evacuating the first fluid, in particular in the form of a discharge scoop (16), the scoop being preferably equipped with at least one control valve.

16. The turboshaft engine nacelle (1) according to any one of claims 1 to 15, **characterized in that** the circulation area (13) of the recirculation loop of the first fluid extends at least partially along the outer fairing of the mast (P) connecting the turboshaft engine to the aircraft, preferably on a surface (3a) intended to be exposed to the flow of outside air around the nacelle.
